# EUROPEAN PATENT APPLICATION

(11) **EP 4 760 852 A1**
(43) Date of publication of application: **17.06.2026**
(21) Application number: 25207561.9
(22) Date of filing: 08.10.2025
(51) Int. Cl.: H01M 10/058, H01M 50/105, H01M 50/178, H01M 50/55, H01M 10/658, H01M 50/202, H01M 50/218, H01M 50/593

(54) **SECONDARY BATTERY AND METHOD OF MANUFACTURING THE SAME**

(30) Priority: 10.12.2024 KR 20240182878
(71) Applicant: SAMSUNG SDI CO., LTD., Yongin-si, Gyeonggi-do 17084 (KR)
(72) Inventor: KANG, Changseong, 17084 Yongin-si (KR); HAN, Seungyeon, 17084 Yongin-si (KR)
(74) Representative: Marks & Clerk LLP

(57) **Abstract**

A secondary battery and a method of manufacturing the same includes an electrode assembly, an exterior portion that accommodates the electrode assembly, a molding portion arranged along a periphery of the exterior portion, and a connecting portion between the exterior portion and the molding portion and that is attachable to the exterior portion. The molding portion surrounds and is coupled to the connecting portion and the exterior portion.

## Description

### BACKGROUND

### 1. Field

The present disclosure relates to a secondary battery and a method of manufacturing the same.

### 2. Description of the Related Art

In general, secondary batteries are capable of multiple charge and discharge cycles, and have recently been applied to various technical fields throughout the industry, such as electricity, electronics, communication, and computers.

Secondary batteries have been widely used as energy sources for mobile electronic devices such as digital cameras, cellular phones, or laptop computers, and are also attracting attention as energy sources for hybrid electric vehicles, etc., which are proposed as a solution to air pollution from conventional gasoline and diesel-powered internal combustion engines that use fossil fuels.

Research on secondary batteries has been conducted in various ways to improve performance and stability according to their usage patterns and usage amount.

The above-described information is only for enhancement of understanding of the background of the present disclosure, and thus may contain information that does not constitute the related art.

### SUMMARY

Embodiments provide a secondary battery in which a connecting portion is arranged between an exterior portion and a molding portion, and is attached to the exterior portion so as to improve (increase) the bonding strength when coupling the molding portion to the exterior portion, and a method of manufacturing the secondary battery.

Technical objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

According to an embodiment of the present disclosure, a secondary battery includes an electrode assembly, an exterior portion that accommodates (or accommodating) the electrode assembly, a molding portion arranged (or extending) along a periphery (or circumference) of the exterior portion, and a connecting portion (that is arranged) between the exterior portion and the molding portion and attached (or attachable) to the exterior portion. The molding portion surrounds and is coupled to the connecting portion and the exterior portion.

In an embodiment, the connecting portion may include a connecting body facing (or arranged to face) the molding portion, and an adhesive surface (that is) coupled to one surface of the connecting body that faces (or facing) the exterior portion. The adhesive surface may include an adhesive material.

In an embodiment, the connecting body may include another adhesive material and the (another) adhesive material may be integral (or integrally formed) with the adhesive surface.

In an embodiment, the adhesive surface may be connected to a portion of the connecting body (or a preset region) along a longitudinal direction of the connecting body.

In an embodiment, the adhesive surface may be connected to a central portion (of the connecting body) along the longitudinal direction of the connecting body.

In an embodiment, the connecting portion may be attached (or attachable) to the exterior portion and surround the periphery (or circumference) of the exterior portion.

In an embodiment, the connecting portion may include two or more (or a plurality of) connecting portions, and the connecting portions may be respectively attached to a two or more (or a plurality of) regions along the periphery (or circumference) of the exterior portion.

In an embodiment, the exterior portion may include an accommodation portion that accommodates (or accommodating) the electrode assembly, and a flange extending along a periphery (or circumference) of the accommodation portion.

In an embodiment, the exterior portion may further include a first exterior body including the accommodation portion and having a first flange extending along the periphery (or circumference) of the accommodation portion, and a second exterior body that includes a second flange (configured) to contact the first flange and cover the accommodation portion.

In an embodiment, the first flange and the second flange may be foldable toward the accommodation portion.

In an embodiment, the molding portion may include an insulating material.

In an embodiment, the electrode assembly may include a first electrode tab and a second electrode tab each extending to (an) outside of the exterior portion.

According to an embodiment of the present disclosure, a method of manufacturing a secondary battery includes accommodating an electrode assembly in an exterior portion, arranging a connecting portion on the exterior portion, and coupling a molding portion along a periphery (or circumference) of the exterior portion to cover the connecting portion. The connecting portion is attached (or attachable) to the exterior portion.

In an embodiment, the electrode assembly may include a first electrode tab and a second electrode tab, each extending to (an) outside of the exterior portion, and the method may further include connecting a protection circuit board to the first electrode tab and the second electrode tab.

In an embodiment, the method may further include coupling an insulating member to the protection circuit board.

In an embodiment, the electrode assembly may further include a first electrode plate, a second electrode plate, and a separator (arranged) between the first electrode plate and the second electrode plate. The first electrode plate may be connected to the first electrode tab, and the second electrode plate may be connected to the second electrode tab.

In an embodiment, the coupling of the molding portion may be performed after the coupling of the insulating member to the protection circuit board.

In an embodiment, the connecting portion may include a connecting body facing (or arranged to face) the molding portion, and an adhesive surface (that is) coupled to one surface of the connecting body that faces the exterior portion. The adhesive surface includes an adhesive material.

In an embodiment, the connecting body may include another adhesive material and the adhesive material may be integral (or integrally formed) with the adhesive surface.

In an embodiment, the adhesive surface may be connected to a central portion (of the connecting body) along the (or a) longitudinal direction of the connecting body.

At least some of the above and other features of the invention are set out in the claims.

### BRIEF DESCRIPTION OF THE DRAWINGS

The accompanying drawings illustrate preferred embodiments of the present disclosure, and together with the description of the present disclosure to be provided below, serve to provide further understanding of the technical features of the present disclosure, and therefore, the present disclosure should not be interpreted as being limited to the drawings in which:
FIG. 1 is a perspective view illustrating a secondary battery before a connecting portion is attached to an exterior portion, according to an embodiment of the present disclosure;
FIG. 2 is a plan view illustrating a state in which an accommodation portion is positioned on the upper side of a secondary battery, according to an embodiment of the present disclosure;
FIG. 3 is a perspective view illustrating a state in which flanges in FIG. 2 are folded;
FIG. 4 is a diagram illustrating a state before a connecting portion is attached to an exterior portion, according to an embodiment of the present disclosure;
FIG. 5 is a diagram illustrating a state in which the connecting portion is attached to the exterior portion in FIG. 4;
FIG. 6 is a diagram illustrating a secondary battery according to an embodiment of the present disclosure;
FIG. 7 is a flowchart of aspects of a method of manufacturing a secondary battery according to an embodiment of the present disclosure;
FIG. 8 is a side cross-sectional view partially illustrating a connecting portion according to another embodiment of the present disclosure;
FIG. 9A is a side view partially illustrating a connecting portion according to another embodiment of the present disclosure;
FIG. 9B is a plan view partially illustrating a connecting portion according to another embodiment of the present disclosure; and
FIG. 10 is a diagram illustrating a secondary battery including a connecting portion, according to another embodiment of the present disclosure.

### DETAILED DESCRIPTION

Hereinafter, preferable embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, embodiments described herein and components illustrated in the drawings are only the most preferred embodiments of the present disclosure and do not represent all aspects of the present disclosure, and thus, it should be understood that various equivalents and modifications that may replace them may be made at the time of filing of the present disclosure.

In addition, the terms "includes", "comprises" and/or "including", "comprising" used herein specify the presence of stated shapes, numbers, processes, members, components, and/or groups thereof, but do not preclude the presence or addition of one or more other shapes, numbers, operations, members, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

When it is described that two objects are 'identical', this means that these objects are 'substantially identical'. Accordingly, the substantially identical objects may include deviations considered low in the art, for example, deviations within 5 %. In addition, when it is described that certain parameters are uniform in a region, this may mean that the parameters are uniform in terms of an average in the corresponding region.

Although the terms 'first', 'second', and the like are used to describe different elements, these elements are not limited by the terms. These terms are used to distinguish one element from another, and unless stated otherwise, a first element may be a second element.

Throughout the specification, unless stated otherwise, each element may be singular or plural.

When an element is referred to as being arranged "above (or under)" or "on (or below)" another element, the element may be arranged on an upper surface (or a lower surface) of the other element, and an intervening element may be arranged between the element and the other element on (or below) the element.

In addition, when an element is referred to as being "connected", "coupled", or "linked" to another element, it should be understood that the element may be directly connected or coupled to the other element, but an intervening element may be "interposed" between the elements, or the elements may be "connected", "coupled", or "linked" to each other through another element. In addition, when a part is referred to as being "electrically coupled" to another part, the part may be directly connected to the other part or may be connected to the other part through an intervening element therebetween.

Throughout the specification, "A and/or B" refers to A, B, or both A and B unless stated otherwise. That is, "and/or" includes all or any combination of the listed items. "C to D" includes values greater than or equal to C but less than or equal to D, unless stated otherwise.

The terminology used herein is for the purpose of describing embodiments of the present disclosure, and is not intended to limit the present disclosure.

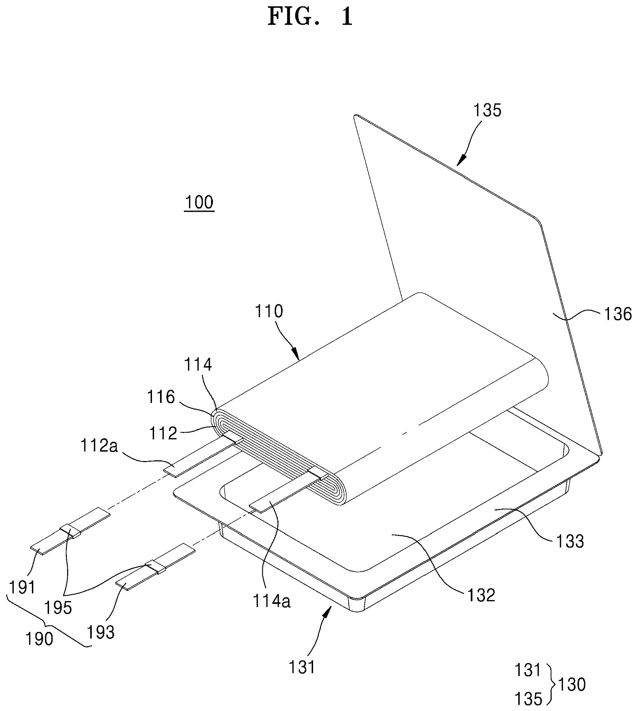

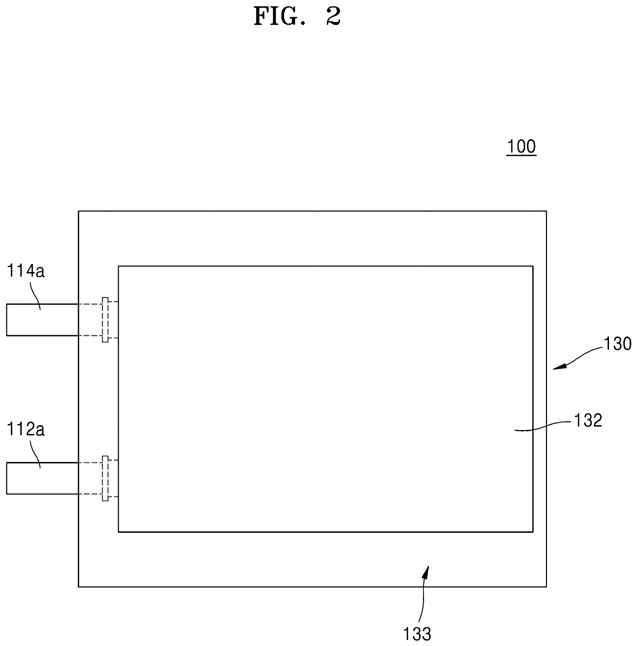

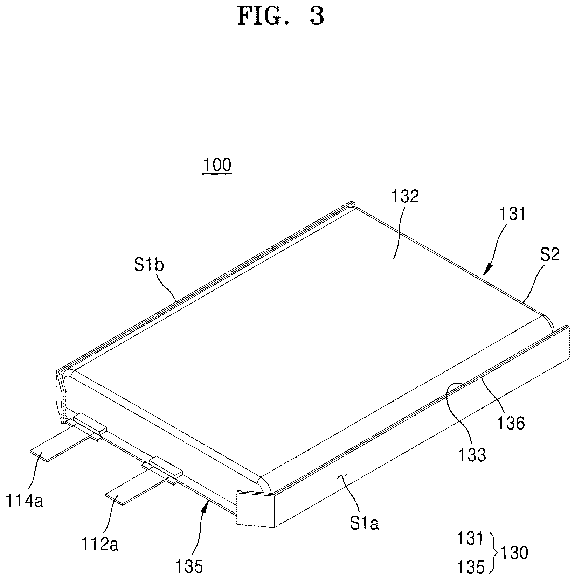

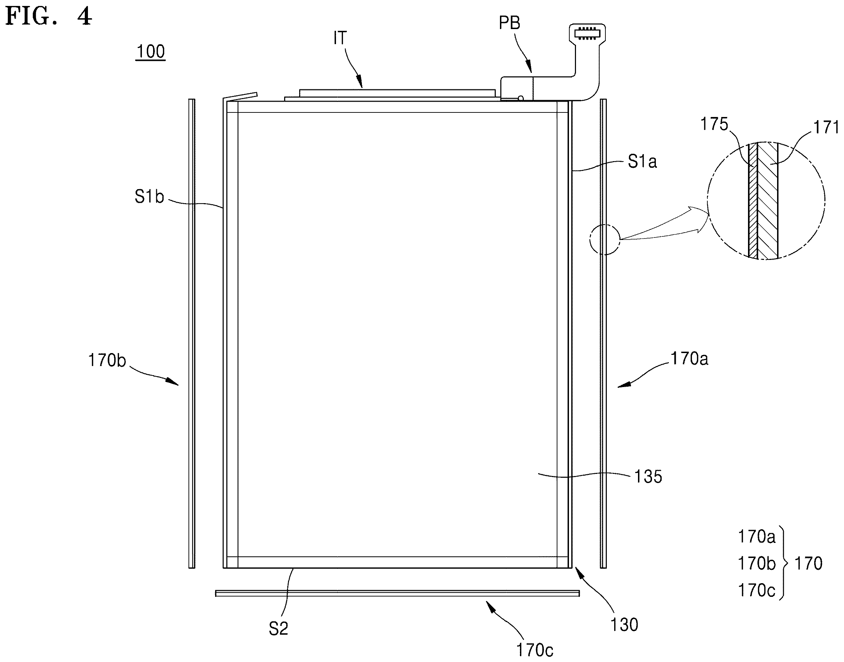

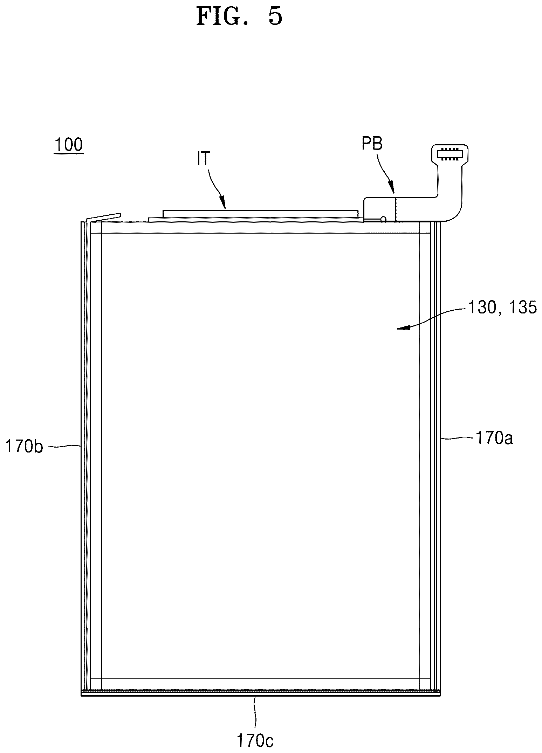

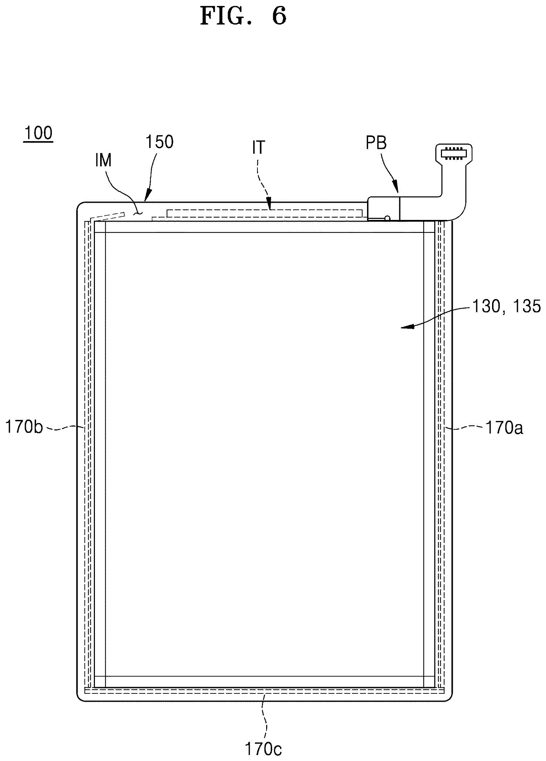

FIG. 1 is a perspective view illustrating a secondary battery in an intermediate state during manufacturing before a connecting portion is attached to an exterior portion, according to an embodiment of the present disclosure. FIG. 2 is a plan view illustrating a state in which an accommodation portion is positioned on the upper side of a secondary battery, according to an embodiment of the present disclosure. FIG. 3 is a perspective view illustrating a state in which flanges shown in FIG. 2 are folded. FIG. 4 is a diagram illustrating a state before a connecting portion is attached to an exterior portion, according to an embodiment of the present disclosure. FIG. 5 is a diagram illustrating a state in which the connecting portion is attached to the exterior portion in FIG. 4. FIG. 6 is a diagram illustrating a secondary battery according to an embodiment of the present disclosure.

Referring to FIGS. 1 to 6, a secondary battery 100 according to an embodiment of the present disclosure may include an electrode assembly 110, an exterior portion 130, a molding portion 150, a connecting portion 170, and a strip terminal 190.

Referring to FIG. 1, an electrode assembly 110 according to an embodiment of the present disclosure may include a first electrode plate 112 that is a negative electrode plate, a second electrode plate 114 that is a positive electrode plate, and a separator 116 between the first electrode plate 112 and the second electrode plate 114.

In an embodiment in which the electrode assembly 110 is a wound stack, the winding axis may be parallel (or substantially parallel) to the longitudinal direction of the exterior portion 130 that accommodates the electrode assembly 110.

In one or more embodiments, the electrode assembly 110 may be a stack type rather than a winding type, and the shape of the electrode assembly 110 is not limited in the present disclosure.

In one or more embodiments, the electrode assembly 110 may be a stack electrode assembly in which a positive electrode plate and a negative electrode plate are on both sides of a separator and curved in a stack.

For example, one or more electrode assemblies 110 may be stacked such that long sides thereof are adjacent to each other and accommodated in the exterior portion 130, and the number of electrode assemblies 110 is not limited in the present disclosure.

The first electrode plate 112, which is the negative electrode plate of the electrode assembly 110, may serve as a negative electrode, and the second electrode plate 114, which is the positive electrode plate, may serve as a positive electrode. In one or more embodiments, the first electrode plate 112 may serve as a positive electrode, and the second electrode plate 114 may serve as a negative electrode.

Referring to FIG. 1, the first electrode plate 112 may include a first electrode tab 112a electrically connected to a negative electrode uncoated portion, and the second electrode plate 114 may include a second electrode tab 114a electrically connected to a positive electrode uncoated portion.

The first electrode tab 112a and the second electrode tab 114a may be respectively welded to a first electrode lead 191 and a second electrode lead 193 of the strip terminal 190, which is an external terminal, to be electrically connected to the outside. Tab films 195 for insulation from the exterior portion 130 may be attached to the first electrode lead 191 and the second electrode lead 193.

The first electrode plate 112 may be formed by coating a first electrode active material, such as graphite or carbon, on a first electrode current collector plate formed of a metal foil such as copper, a copper alloy, nickel, or a nickel alloy, and may include the first electrode tab 112a (or a first uncoated portion), which is a region where the first electrode active material is not coated.

The first electrode tab 112a may serve as a path for current flow between the first electrode plate 112 and a first current collector. In some embodiments, the first electrode tab 112a may be formed by cutting the first electrode plate 112 in advance such that the first electrode tab 112a protrudes to one side when manufacturing the first electrode plate 112, and the first electrode tab 112a may protrude further to the one side than the separator 116 without a separate cutting operation.

The second electrode plate 114 may be formed by coating a second electrode active material, such as a transition metal oxide, on a second electrode current collector plate formed of a metal foil such as aluminum or an aluminum alloy, and may include the second electrode tab 114a (or a second uncoated portion), which is a region where the second electrode active material is not coated.

The second electrode tab 114a may serve as a path for current flow between the second electrode plate 114 and a second current collector. In some embodiments, the second electrode tab 114a may be formed by cutting the second electrode plate 114 in advance such that the second electrode tab 114a protrudes to one side when manufacturing the second electrode plate 114, and the second electrode tab 114a may protrude further than the separator 116 without a separate cutting operation.

In some embodiments, the first electrode tab 112a may be located on the left side surface (or proximate to the left side surface) of the electrode assembly 110, and the second electrode tab 114a may be located on the right side surface (or proximate to the right side surface) of the electrode assembly 110, or the first electrode tab 112a and the second electrode tab 114a may be located on the same surface (or proximate to the same surface).

Here, the left and right sides are for convenience of description based on the secondary battery illustrated in FIG. 1, and their positions may be changed when the secondary battery is rotated in the horizontal or vertical direction.

The first electrode tab 112a of the first electrode plate 112 and the second electrode tab 114a of the second electrode plate 114 may be respectively located at opposite ends (or opposite sides) of the electrode assembly 110 as described above.

In some embodiments, the electrode assembly 110 may be accommodated in a case together with an electrolyte. For example, the first current collector and the second current collector may be respectively welded and connected to the first electrode tab 112a of the first electrode plate 112 and the second electrode tab 114a of the second electrode plate 114 that are exposed on opposite sides of the electrode assembly 110, respectively.

Referring to FIGS. 1 to 6, the exterior portion 130 according to an embodiment of the present disclosure may include an accommodation portion 132 in which the electrode assembly 110 is accommodated, and a flange may extend along the periphery (e.g., circumference) of the accommodation portion 132.

Referring to FIG. 1, the exterior portion 130 may include a first exterior body 131 and a second exterior body 135. The first exterior body 131 and the second exterior body 135 may be connected to each other in a preset region, and may be coupled to each other to surround the electrode assembly 110.

Referring to FIG. 1, the first exterior body 131 may have formed therein the accommodation portion 132 having a preset depth, and the electrode assembly 110 may be accommodated in the accommodation portion 132. The first exterior body 131 may have a flange (e.g., a first flange 133) extending outward along the periphery (e.g., circumference) of the accommodation portion 132.

The first flange 133 of the first exterior body 131 may be coupled in surface contact with a second flange 136 of the second exterior body 135, which will be described below.

The first flange 133 and the second flange 136 may be coupled to each other to form a flange of the exterior portion 130 according to an embodiment of the present disclosure, and the flange may form a sealing region along the periphery (e.g., circumference) of the electrode assembly 110 that is accommodated in the accommodation portion 132.

The flange may be formed of a heat-fusible material, and may have a structure in which heat-fusible layers are bonded to each other to form a sealing region.

In a state in which the electrode assembly 110 is accommodated in the accommodation portion 132 according to an embodiment of the present disclosure, the first exterior body 131 and the second exterior body 135 may be coupled to each other, and a flange in which the first flange 133 and the second flange 136 are coupled to each other may be formed along the periphery (e.g., circumference) of the exterior portion 130.

FIG. 4 is a diagram illustrating the exterior portion 130 viewed from below before the connecting portion 170, which will be described below, is attached. Referring to FIGS. 1 and 4, the second exterior body 135 may be coupled to the first exterior body 131, the second flange 136 may contact the first flange 133 of the first exterior body 131, and the second exterior body 135 may cover the accommodation portion 132 in the first exterior body 131.

Referring to FIG. 1, when the second exterior body 135 is coupled to the first exterior body 131 to cover the accommodation portion 132 while the electrode assembly 110 is accommodated in the accommodation portion 132, an accommodation space in which a portion of the electrode assembly 110 is accommodated may be formed at a position corresponding to the accommodation portion 132.

Accordingly, when the first exterior body 131 and the second exterior body 135, which constitute the exterior portion 130, are coupled to each other to surround the electrode assembly 110, the secondary battery 100 may have a shape in which the upper and lower sides protrude based on the flange formed along the periphery (e.g., circumference) of the exterior portion 130.

A flange (e.g., the second flange 136) may extend outward along the periphery (e.g., circumference) of a region of the second exterior body 135 that covers the electrode assembly 110 that is accommodated in the accommodation portion 132.

The second flange 136 of the second exterior body 135 may be in surface contact with and coupled to the first flange 133. As the first flange 133 and the second flange 136 are coupled to each other, a sealing region may be formed along the periphery (e.g., circumference) of the electrode assembly 110 that is accommodated in the accommodation portion 132.

Referring to FIG. 3, the flange formed to extend along the periphery (e.g., circumference) of the exterior portion 130 may include folded portions where both sides (the upper and lower sides in FIG. 2) based on the longitudinal central axis of the secondary battery 100 are folded.

Referring to FIGS. 3 to 5, the folded portions may be portions of the flange in which the first flange 133 and the second flange 136 are coupled to each other and extend in the peripheral (e.g., circumferential) direction of the exterior portion 130.

Referring to FIG. 3, the folded portions may be located on opposite sides along the longitudinal direction of the electrode assembly 110, and may be formed by folding inward or outward the first flange 133 and the second flange 136, which are coupled to each other.

Referring to FIG. 3, the folded portions may be formed by folding the flange toward the accommodation portion 132 formed in the exterior portion 130. A pair of folded portions may be provided, and may be arranged on opposite sides of the secondary battery 100 with respect to the longitudinal central axis of the exterior portion 130.

Referring to FIGS. 3 and 4, one end of the folded portion protruding outward (upward in FIG. 4) from the accommodation portion 132 along the longitudinal direction of the secondary battery 100 may be folded toward the electrode assembly 110 (e.g., toward the first electrode tab 112a and the second electrode tab 114a).

Referring to FIGS. 3 and 4, as the flange formed by coupling the first flange 133 to the second flange 136 is folded toward the accommodation portion 132 provided in the first exterior body 131 so as to form the folded portions, opposite side surfaces S1a and S1b of the exterior portion 130 may correspond to the second flange 136.

Referring to FIG. 4, one surface S2 (the lower surface in FIG. 4) arranged to face a protection circuit board PB in the longitudinal direction (the vertical direction in FIG. 4) of the secondary battery 100 may also be one region of the second exterior body 135.

However, the present disclosure is not limited thereto, and in an embodiment in which the first exterior body 131 and the second exterior body 135 are not folded on one side (the lower side in FIG. 4) arranged to face the protection circuit board PB in the longitudinal direction (the vertical direction in FIG. 4) of the secondary battery 100, the surface S2 located on the one side may be a region of the first exterior body 131 (e.g., a region of the accommodation portion 132), and various modifications are possible.

Referring to FIG. 6, the molding portion 150 according to an embodiment of the present disclosure may be coupled to and surround the exterior portion 130 along the periphery (e.g., circumference) of the exterior portion 130, and may be formed of (or include) an insulating material IM. The molding portion 150 may be formed by curing the flowable insulating material IM surrounding the exterior portion 130.

Referring to FIG. 6, the molding portion 150 may surround and be coupled to the folded portions formed on opposite sides in the longitudinal direction (the vertical direction in FIG. 6) of the secondary battery 100, and the connecting portion 170 to be described below, which is attachable to the folded portions.

The molding portion 150 may be arranged along the periphery (e.g., circumference) of the exterior portion 130, and may be arranged on one side (the upper side in FIG. 6) of the exterior portion 130 where the protection circuit board PB is arranged, and on the other side (the lower side in FIG. 6) opposite to the one side (the upper side in FIG. 6).

For example, on the other side, the molding portion 150 may surround and be coupled to the exterior portion 130 and the connecting portion 170 that is attachable to the exterior portion 130. The insulating material IM forming the molding portion 150 may be in contact with and coupled to the connecting portion 170 (e.g., a connecting body 171, which will be described below).

Forming the molding portion 150 by curing the insulating material IM in contact with the connecting body 171 improves the bonding strength compared to directly bonding the insulating material IM to the exterior portion 130 which has a relatively smoother surface than the connecting body 171.

The coupling between the molding portion 150, the exterior portion 130, and the connecting portion 170 will be described in detail below.

Referring to FIGS. 4 to 6, the connecting portion 170 according to an embodiment of the present disclosure may be arranged between the exterior portion 130 and the molding portion 150, and may be attached to the exterior portion 130. A plurality of connecting portions 170 may be provided.

A plurality of connecting portions 170a, 170b, and 170c may be respectively attached to a plurality of regions formed along the periphery (e.g., circumference) of the exterior portion 130.

Referring to FIG. 4, some of the plurality of connecting portions 170a, 170b, and 170c may be attached to the opposite side surfaces S1a and S1b with respect to the longitudinal central axis of the exterior portion 130.

The rest (170c) of the plurality of connecting portions 170a, 170b, and 170c may be attached to the surface S2 (the lower surface in FIG. 4) connecting the opposite side surfaces S1a and S1b to each other.

For example, the surface S2 (the lower surface in FIG. 4) connecting the opposite side surfaces S1a and S1b of the exterior portion 130 may be opposite to the surface (the upper surface in FIG. 4) where the protection circuit board PB is arranged.

The plurality of connecting portions 170a, 170b, and 170c may have the same (or substantially the same) configuration and will be described in detail below.

The connecting portion 170 according to an embodiment of the present disclosure may include the connecting body 171 and an adhesive surface 175.

Referring to FIGS. 4-6, the connecting body 171 may be arranged to the molding portion 150, and may be in direct contact with and connected to the molding portion 150. The connecting body 171 may be formed flat in a plate shape, and may have a relatively greater surface roughness than the outer circumferential surface of the exterior portion 130.

Accordingly, the bonding strength when the insulating material IM forming the molding portion 150 is bonded to the connecting body 171 may be relatively greater than when the insulating material IM is bonded to the outer peripheral (e.g., outer circumferential) surface of the exterior portion 130.

Furthermore, when the molding portion 150 formed after the insulating material IM is cured is bonded to the connecting body 171, compared to being bonded directly to the exterior portion 130, specifically, the folded portions, there is an effect of preventing the bonding between the molding portion 150 and the exterior portion 130 from being released.

In an alternative embodiment, the connecting body 171 may be made of an adhesive material. This may improve the bonding strength (or coupling force) between the connecting body 171 and the insulating material IM forming the molding portion 150, and thereby prevent (or at least mitigate) the molding portion 150 formed by curing the insulating material IM from being separated from the connecting body 171 and the exterior portion 130.

The adhesive surface 175 according to an embodiment of the present disclosure may be coupled to one surface of the connecting body 171 that faces the exterior portion 130, and may be made of an adhesive material. As the adhesive surface 175 is attached to each region (S1a, S1b, and S2) of the exterior portion 130, the position of the connecting body 171 may be fixed.

As the position of the connecting body 171 is fixed, the insulating material IM forming the molding portion 150 may be stably in contact with and coupled to the connecting body 171, and the molding portion 150 formed by curing the insulating material IM may be prevented (or at least mitigated) from being separated from the exterior portion 130.

In an embodiment in which the connecting body 171 is formed of an adhesive material, the adhesive surface 175 may be integrally formed with the connecting body 171. However, the present disclosure is not limited thereto, and various modifications are possible, such as the connecting body 171 and the adhesive surface 175 being stacked and coupled with different adhesive strengths.

Referring to FIG. 4, the adhesive surface 175 may extend along the longitudinal direction and be coupled to the connecting body 171. However, the present disclosure is not limited thereto, and various modifications are possible, such as a plurality of adhesive surfaces 175 being provided and spaced apart from each other at preset intervals (e.g., regular or irregular intervals) on the connecting body 171.

In an alternative embodiment, the length of the adhesive surface 175 may be relatively shorter than the length of the connecting body 171. For example, the adhesive surface 175 may be connected only to a portion of the connecting body 171 in the longitudinal direction (e.g., a central portion).

For example, in an embodiment in which the length of the adhesive surface 175 is relatively shorter than the length of the connecting body 171, a gap corresponding to the thickness of the adhesive surface 175 may be formed between the connecting body 171 and the exterior portion 130 in a region other than the central portion of the connecting body 171 to which the adhesive surface 175 is coupled.

The insulating material IM forming the molding portion 150 may extend (penetrate) into the gap formed between the connecting body 171 and the exterior portion 130, and as the insulating material IM is cured to form the molding portion 150, the bonding strength between the molding portion 150 and the exterior portion 130 may be improved (increased).

A method of manufacturing the secondary battery according to an embodiment of the present disclosure as described above will be described.

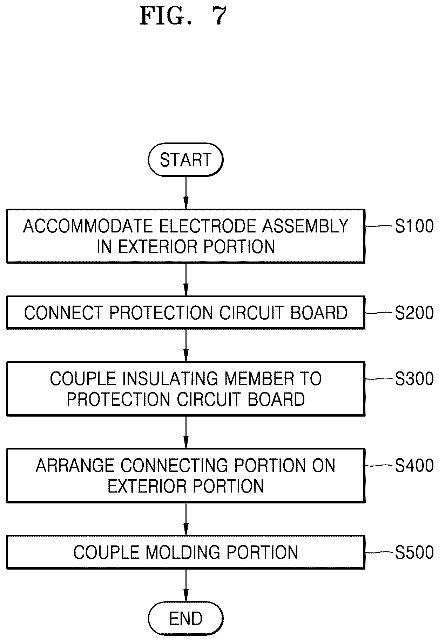

FIG. 7 is a flowchart of aspects of a method of manufacturing a secondary battery according to an embodiment of the present disclosure.

The method of manufacturing a secondary battery according to an embodiment of the present disclosure may include accommodating the electrode assembly 110 in the exterior portion 130 (S100), connecting a protection circuit board (S200), coupling an insulating member to the protection circuit board (S300), arranging the connecting portion 170 on the exterior portion 130 (S400), and coupling the molding portion 150 (S500).

Referring to FIG. 1, the accommodating of the electrode assembly in the exterior portion (S100) may be an operation of seating and accommodating the electrode assembly 110 in the exterior portion 130 (e.g., in the accommodation portion 132 formed in the first exterior body 131), wherein the electrode assembly 110 may be arranged in the accommodation portion 132, and the second exterior body 135 may cover the electrode assembly 110 accommodated in the first exterior body 131.

As the first exterior body 131 and the second exterior body 135 are coupled to each other, a flange may be formed along the periphery (e.g., circumference) of the exterior portion 130 (e.g., along the periphery of the first exterior body 131 and the second exterior body 135).

Referring to FIG. 3, bent portions may be formed by folding a preset section of the flange extending along the periphery (e.g., circumference) of the exterior portion 130, that is, by folding flanges (e.g., the first flange 133 and the second flange 136) formed on opposite sides with respect to the longitudinal central axis (the horizontal direction in FIG. 2) of the secondary battery 100.

Referring to FIG. 4, the connecting of the protection circuit board (S200) may be an operation of connecting the protection circuit board PB to the electrode assembly 110. Next, in the coupling of the insulating member to the protection circuit board (S300), the protection circuit board PB may be surrounded by an insulating member IT.

The insulating member IT may be coupled to the protection circuit board PB in an insert molding manner or operation. A mold may be arranged such that the protection circuit board PB is located inside the mold, and the insulating member IT formed of an insulating material may be injected into the mold and onto the protection circuit board PB to be coupled to the protection circuit board PB.

In one or more embodiments, the protection circuit board PB may be connected to the electrode assembly 110 and then bent in a preset direction. This process is a known technique, and thus, a detailed description thereof will be omitted.

In an alternative embodiment, the protection circuit board PB may be a flexible printed circuit board (FPCB) formed of a flexible material such as polyimide or polyester.

Referring to FIGS. 4 and 5, the arranging of the connecting portion on the exterior portion (S400) may be an operation of arranging the connecting portion 170 in a preset region along the periphery (e.g., circumference) of the exterior portion 130, wherein the connecting portion 170 may be attached to the exterior portion 130.

A plurality of connecting portions 170 may be provided, and the plurality of connecting portions 170a, 170b, and 170c may be attached to respective regions of the exterior portion 130 along the peripheral (e.g., circumferential) direction.

Referring to FIG. 4, some of the plurality of connecting portions 170a, 170b, and 170c may be attached to the opposite side surfaces S1a and S1b with respect to the longitudinal central axis of the exterior portion 130.

The remaining connecting portion (170c) of the plurality of connecting portions 170a, 170b, and 170c may be attached to the surface S2 (the lower surface in FIG. 4) connecting the opposite side surfaces S1a and S1b to each other.

For example, the surface S2 (the lower surface in FIG. 4) connecting the opposite side surfaces S1a and S1b of the exterior portion 130 may be opposite to the surface (the upper surface in FIG. 4) where the protection circuit board PB is arranged.

The connecting portion 170 may include the connecting body 171 and the adhesive surface 175, the adhesive surface 175 may be attached to each surface (S1a, S1b, and S2) of the exterior portion 130, and the connecting body 171 may thereby be fixed in position on each surface (S1a, S1b, and S2).

The arranging of the connecting portion on the exterior portion (S400) may be performed before the connecting of the protection circuit board (S200) and the coupling of the insulating member to the protection circuit board (S300).

Referring to FIG. 6, the coupling of the molding portion (S500) may be an operation of coupling the molding portion 150 to the exterior portion 130 and the connecting portion 170 attached to the exterior portion 130, so as to surround the exterior portion 130 along the periphery (e.g., circumference).

Referring to FIG. 6, as the insulating material IM is applied and then cured, the molding portion 150 may be positioned on the connecting portion 170 (e.g., on the connecting body 171 connected to the adhesive surface 175 attached to the exterior portion 130 and fixed in position on the adhesive surface 175).

As the connecting body 171 and the molding portion 150 are coupled to each other, the bonding strength of the molding portion 150, which surrounds and is coupled to the exterior portion 130 along the periphery (e.g., circumference) of the exterior portion 130, to the exterior portion 130 may be improved (increased).

In other words, when the molding portion 150 is bonded to the connecting portion 170 arranged in a preset region on the exterior portion 130 (e.g., to the connecting body 171 having a relatively higher surface roughness than the surface of the exterior portion 130), the bonding strength between the exterior portion 130 and the molding portion 150 may be improved (increased) compared to when the molding portion 150 formed by curing the insulating material IM is directly bonded to the exterior portion 130, which has a relatively smooth surface and a relatively low surface roughness.

Hereinafter, the configuration, operating principle, and effects of a secondary battery according to another embodiment of the present disclosure will be described.

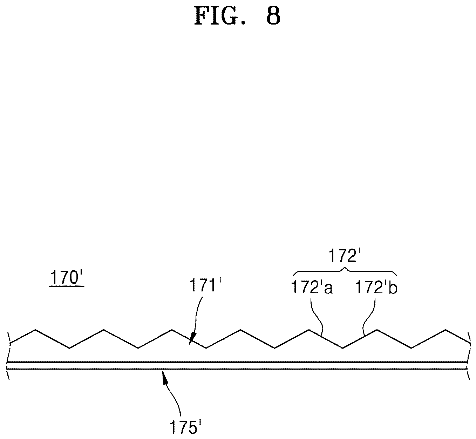

FIG. 8 is a side cross-sectional view partially illustrating a connecting portion 170' according to another embodiment of the present disclosure.

Referring to FIGS. 1 and 8, a secondary battery according to another embodiment of the present disclosure may include an electrode assembly 110, the exterior portion 130, a molding portion, a connecting portion 170', and the strip terminal 190.

The secondary battery according to another embodiment of the present disclosure is different from the secondary battery 100 according to an embodiment of the present disclosure in the connecting portion 170' (e.g., a connecting body 171'), and thus the connecting body 171' will be described in detail below.

Referring to FIG. 8, the connecting portion 170' may include the connecting body 171' and an adhesive surface 175'.

The connecting body 171' may be arranged to face the molding portion, and may be in direct contact with and connected to the molding portion. A seating portion 172' having a preset depth and in which the molding portion may be seated may be formed on one surface (the upper surface in FIG. 8) of the connecting body 171 facing the molding portion.

The insulating material IM forming the molding portion may be arranged in the seating portion 172'. Referring to FIG. 8, the seating portion 172' may have a shape of a groove whose cross-sectional area relatively decreases in the depth direction (in the downward direction in FIG. 8) (e.g., a zigzag shape).

In other words, the seating portion 172' may include a plurality of inclined surfaces 172'a and 172'b that are connected to each other at a preset angle (e.g., forming triangular peaks).

Referring to FIG. 8, due to the plurality of inclined surfaces 172'a and 172'b formed to be inclined downward toward a region where they are connected to each other, the seating portion 172' may have the shape of a groove whose cross-sectional area relatively decreases in the depth direction (in the downward direction in FIG. 8).

Accordingly, the insulating material IM forming the molding portion may penetrate to a relatively deeper position (compared to an embodiment in which the surface is flat), and as the insulating material IM is cured to form the molding portion, the bonding strength between the molding portion and the connecting portion 170 (e.g., the connecting body 171) may be improved (increased).

Furthermore, as the bonding strength between the connecting portion 170', the exterior portion 130 to which the connecting portion 170' is attached, and the molding portion is improved, the molding portion may be prevented (or at least mitigated) from being separated from the exterior portion 130.

Furthermore, as the seating portion 172' has the plurality of inclined surfaces 172'a and 172'b formed to be inclined downward toward the region where they are connected to each other, the contact area between the connecting body 171' and the molding portion may be increased (compared to an embodiment in which the surface is flat), and as the contact area increases, the bonding strength between the connecting body 171' and the molding portion may be improved (increased).

Referring to FIG. 8, the adhesive surface 175' may be coupled to one surface of the connecting body 171' that faces the exterior portion 130, and may be made of an adhesive material. As the adhesive surface 175' is attached to each region (S1a, S1b, and S2 in FIG. 3) of the exterior portion 130, the position of the connecting body 171' may be fixed.

As the position of the connecting body 171' is fixed, the insulating material IM forming the molding portion may be stably in contact with and coupled to the connecting body 171', and the molding portion formed by curing the insulating material IM may be prevented (or at least mitigated) from being separated from the exterior portion 130.

In an embodiment in which the connecting body 171' is formed of an adhesive material, the adhesive surface 175' may be integrally formed with the connecting body 171'. However, the present disclosure is not limited thereto, and various modifications are possible, such as the connecting body 171' and the adhesive surface 175' being stacked and coupled with different adhesive strengths.

Referring to FIG. 8, the adhesive surface 175' may extend along the longitudinal direction and be coupled to the connecting body 171'. However, the present disclosure is not limited thereto, and various modifications are possible, such as a plurality of adhesive surfaces 175' being provided and spaced apart from each other at preset intervals (e.g., regular or irregular intervals) on the connecting body 171'.

In an alternative embodiment, the length of the adhesive surface 175' may be relatively shorter than the length of the connecting body 171'. For example, the adhesive surface 175' may be connected only to a portion of the connecting body 171' in the longitudinal direction (e.g., a central portion).

For example, in an embodiment in which the length of the adhesive surface 175' is relatively shorter than the length of the connecting body 171', a gap corresponding to the thickness of the adhesive surface 175' may be formed between the connecting body 171' and the exterior portion 130 in a region other than the central portion of the connecting body 171' to which the adhesive surface 175' is coupled.

The insulating material IM forming the molding portion may extend (penetrate) into the gap formed between the connecting body 171' and the exterior portion 130, and as the insulating material IM is cured to form the molding portion, the bonding strength between the molding portion and the exterior portion 130 may be improved (increased).

The secondary battery according to another embodiment of the present disclosure has the same configuration, manufacturing method, and effects as those of the electrode assembly 110, the exterior portion 130, the molding portion, and the strip terminal 190, except that the seating portion 172' in which the molding portion may be seated is formed on one surface of the connecting body 171 that faces the molding portion, in relation to the specific configuration of the connecting portion 170', and thus, redundant detailed descriptions thereof will be omitted.

Hereinafter, the configuration, operating principle, and effects of a secondary battery according to another embodiment of the present disclosure will be described.

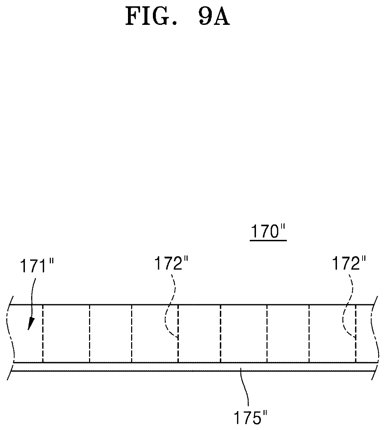

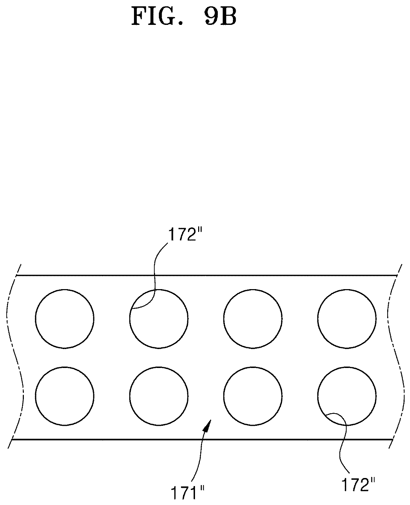

FIG. 9A is a side view illustrating a portion of a connecting portion according to another embodiment of the present disclosure. FIG. 9B is a plan view illustrating a portion of a connecting portion according to another embodiment of the present disclosure.

Referring to FIGS. 1, 9A, and 9B, a secondary battery according to another embodiment of the present disclosure may include the electrode assembly 110, the exterior portion 130, a molding portion, a connecting portion 170", and the strip terminal 190.

The secondary battery according to another embodiment of the present disclosure is different from the secondary battery 100 according to an embodiment of the present disclosure in the connecting portion 170" (e.g., a connecting body 171") and thus the connecting body 171" will be described in detail below.

Referring to FIGS. 9A and 9B, the connecting portion 170" may include the connecting body 171" and an adhesive surface 175". The connecting body 171" may be arranged to face the molding portion 150, and may be in direct contact with and connected to the molding portion 150.

A hollow seating portion 172" having a preset depth may be formed on one surface (the upper surface in FIG. 9A) of the connecting body 171" that faces the molding portion 150. The seating portion 172" may be formed in a cylindrical shape. In one or more embodiments, the connecting body 171" may include a plurality of hollow seating portions 172" (e.g., cylindrical openings) arranged in a series of rows and columns.

The insulating material IM forming the molding portion 150 may be arranged in the seating portion 172". Referring to FIG. 9A, the insulating material IM may be filled (or substantially filled) in the hollow seating portion 172", and the filled insulating material IM may be cured to form the molding portion 150.

The molding portion 150 formed by curing the insulating material IM, (e.g., the molding portion 150 located inside the seating portion 172") may be in contact with and coupled to the inner circumferential surface of the seating portion 172" along the inner circumferential surface of the seating portion 172".

Accordingly, the bonding strength between the molding portion 150 and the connecting body 171" may be improved (increased), and the bonding strength between the molding portion 150 and the exterior portion 130 to which the adhesive surface 175" coupled to the connecting body 171" is attached may be improved (increased).

Furthermore, as the bonding strength between the connecting portion 170", the exterior portion 130 to which the connecting portion 170" is attached, and the molding portion 150 is improved (increased), that the molding portion 150 may be prevented (or at least mitigated) from being separated from the exterior portion 130.

Referring to FIGS. 9A and 9B, a plurality of seating portions 172" may be provided to be spaced apart from each other on the connecting body 171".

Referring to FIG. 9A, the adhesive surface 175" may be coupled to one surface of the connecting body 171" that faces the exterior portion 130, and may be made of an adhesive material. As the adhesive surface 175" is attached to each region (S1a, S1b, and S2 in FIG. 3) of the exterior portion 130, the position of the connecting body 171" may be fixed.

As the position of the connecting body 171" is fixed, the insulating material IM forming the molding portion 150 may be stably in contact with and coupled to the connecting body 171", and the molding portion 150 formed by curing the insulating material IM may be prevented (or at least mitigated) from being separated from the exterior portion 130.

In an embodiment in which the connecting body 171" is formed of an adhesive material, the adhesive surface 175" may be integrally formed with the connecting body 171". However, the present disclosure is not limited thereto, and various modifications are possible, such as the connecting body 171" and the adhesive surface 175" being stacked and coupled with different adhesive strengths.

Referring to FIG. 9A, the adhesive surface 175" may extend along the longitudinal direction and be coupled to the connecting body 171". However, the present disclosure is not limited thereto, and various modifications are possible, such as a plurality of adhesive surfaces 175" being provided and spaced apart from each other at preset intervals on the connecting body 171".

In an alternative embodiment, the length of the adhesive surface 175" may be relatively shorter than the length of the connecting body 171". For example, the adhesive surface 175" may be connected only to a portion of the connecting body 171" in the longitudinal direction (e.g., a central portion).

For example, in an embodiment in which the length of the adhesive surface 175" is relatively shorter than the length of the connecting body 171", a gap corresponding to the thickness of the adhesive surface 175" may be formed between the connecting body 171" and the exterior portion 130 in a region other than the central portion of the connecting body 171" to which the adhesive surface 175" is coupled.

The insulating material IM forming the molding portion 150 may extend (penetrate) into the gap formed between the connecting body 171" and the exterior portion 130, and as the insulating material IM is cured to form the molding portion 150, the bonding strength between the molding portion 150 and the exterior portion 130 may be improved (increased).

The secondary battery according to another embodiment of the present disclosure has the same configuration and effects as those of the electrode assembly 110, the exterior portion 130, the molding portion, and the strip terminal 190, except that the hollow seating portion 172" in which the molding portion may be seated is formed on one surface of the connecting body 171" that faces the molding portion 150, in relation to the specific configuration of the connecting portion 170", and thus, redundant detailed descriptions thereof will be omitted.

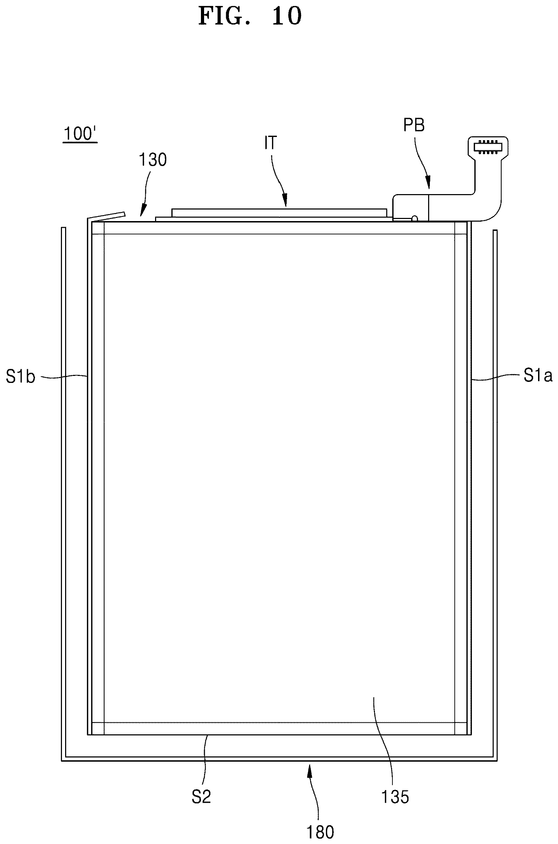

Hereinafter, a configuration and effects of a secondary battery 100' according to another embodiment of the present disclosure will be described. FIG. 10 is a diagram illustrating a secondary battery including a connecting portion, according to another embodiment of the present disclosure.

Referring to FIGS. 1 and 10, the secondary battery 100' according to another embodiment of the present disclosure may include the electrode assembly 110, the exterior portion 130, the molding portion 150, a connecting portion 180, and the strip terminal 190.

The secondary battery 100' according to another embodiment of the present disclosure is different from the secondary battery 100 according to an embodiment of the present disclosure in the configuration of the connecting portion 180, and thus, the following description will focus on the connecting portion 180.

Referring to FIG. 10, the connecting portion 180 may be attached to the exterior portion 130 while surrounding the periphery (e.g., circumference) of the exterior portion 130. For example, the connecting portion 180 may be integrally formed, and may be attached to the exterior portion 130 while surrounding a plurality of regions S1a, S1b, and S2 formed along the periphery (e.g., circumference) of the exterior portion 130.

The connecting portion 180 according to another embodiment of the present disclosure may have a '⊏' shape with one side (the upper side in FIG. 10) opened, so as to surround the plurality of regions S1a, S1b, and S2 formed in the exterior portion 130.

An adhesive surface may extend on the inner surface of the connecting portion 180 that faces the exterior portion 130, and a connecting body may be arranged on the outer surface of the connecting portion 180 facing the exterior portion 130 with the adhesive surface therebetween.

The connecting portion 180 according to another embodiment of the present disclosure has the same configuration, manufacturing method, and effects as those of the electrode assembly 110, the exterior portion 130, the molding portion 150, and the strip terminal 190 of the secondary battery 100 according to an embodiment of the present disclosure, except that a single connecting portion 180 is coupled to the exterior portion 130 while surrounding the plurality of regions S1a, S1b, and S2 formed along the periphery (e.g., circumference) of the exterior portion 130, and thus redundant detailed descriptions thereof will be omitted.

In the secondary battery according to embodiments of the present disclosure, the connecting portion may be arranged between the exterior portion and the molding portion and may be attached to the exterior portion, and the molding portion is coupled to the exterior portion while surrounding the connecting portion rather than the exterior portion having a relatively smooth surface, such that the bonding strength between the exterior portion and the molding portion may be improved (increased).

Furthermore, because the seating portion is formed on the connecting body that may come into contact with the molding portion, the contact area between the molding portion and the connecting body may be increased, and the bonding strength between the molding portion and the connecting portion may be improved (increased).

Furthermore, as the bonding strength between the molding portion and the connecting portion is improved (increased), the molding portion that is coupled to the exterior portion while covering the connecting portion may be prevented (or at least mitigated) from being separated from the exterior portion.

According to embodiments, the connecting portion may be arranged between the exterior portion and the molding portion and may be attached to the exterior portion, and the molding portion is coupled to the exterior portion while surrounding the connecting portion rather than the exterior portion having a relatively smooth surface, such that the bonding strength between the exterior portion and the molding portion may be improved (increased).

Furthermore, because the seating portion is formed on the connecting body that may come into contact with the molding portion, the contact area between the molding portion and the connecting body may be increased (increased), and the bonding strength between the molding portion and the connecting portion may be improved (increased).

Furthermore, as the bonding strength between the molding portion and the connecting portion is improved (increased), the molding portion that is coupled to the exterior portion while covering the connecting portion may be prevented (or at least mitigated) from being separated from the exterior portion.

However, the effects of the present disclosure are not limited to the foregoing, and other unmentioned effects would be clearly understood by those of skill in the art from the following description.

Although the present disclosure has been described above by means of limited embodiments and drawings, the present disclosure is not limited thereto, and various modifications and variations are possible by those of skill in the art without departing from the scope of the present disclosure as defined by the appended claims.

## Claims

1. A secondary battery comprising:
an electrode assembly;
an exterior portion accommodating the electrode assembly;
a molding portion extending along a periphery of the exterior portion; and
a connecting portion between the exterior portion and the molding portion, and attached to the exterior portion,
wherein the molding portion surrounds and is coupled to the connecting portion and the exterior portion.

2. The secondary battery of claim 1, wherein the connecting portion comprises:
a connecting body facing the molding portion; and
an adhesive surface coupled to one surface of the connecting body facing (or that faces) the exterior portion, the adhesive surface comprising an adhesive material.

3. The secondary battery of claim 2, wherein the connecting body comprises another adhesive material and wherein the another adhesive material is integral with the adhesive surface.

4. The secondary battery of claim 2 or claim 3, wherein the adhesive surface is connected to a preset region along a longitudinal direction of the connecting body.

5. The secondary battery of any preceding claim, wherein
(A) the adhesive surface is connected to a central portion of the connecting body along the longitudinal direction of the connecting body;
and/or
(B) the connecting portion is attached to the exterior portion and surrounds the periphery of the exterior portion.

6. The secondary battery of any preceding claim, wherein the connecting portion comprises a plurality of connecting portions, and
the plurality of connecting portions is respectively attached to a plurality of regions along the periphery of the exterior portion.

7. The secondary battery of claim 2 or any preceding claim dependent directly or indirectly on claim 2, wherein the exterior portion comprises:
an accommodation portion accommodating the electrode assembly; and
a flange extending along a periphery of the accommodation portion.

8. The secondary battery of claim 7, wherein the exterior portion further comprises:
a first exterior body comprising the accommodation portion and having a first flange extending along the periphery of the accommodation portion; and
a second exterior body that comprises a second flange configured to contact the first flange and cover the accommodation portion;
and, optionally, the first flange and the second flange are foldable toward the accommodation portion.

9. The secondary battery of any preceding claim, wherein the molding portion comprises an insulating material.

10. The secondary battery of any preceding claim, wherein the electrode assembly comprises a first electrode tab and a second electrode tab each extending to an outside of the exterior portion.

11. A method of manufacturing a secondary battery, the method comprising:
accommodating an electrode assembly in an exterior portion;
arranging a connecting portion on the exterior portion; and
coupling a molding portion along a periphery of the exterior portion to cover the connecting portion,
wherein the connecting portion is attached to the exterior portion.

12. The method of claim 11, wherein the electrode assembly comprises a first electrode tab and a second electrode tab, each of the first electrode tab and the second electrode tab extending to an outside of the exterior portion, and
wherein the method further comprises connecting a protection circuit board to the first electrode tab and the second electrode tab.

13. The method of claim 12, further comprising coupling an insulating member to the protection circuit board.

14. The method of claim 12 or claim 13, wherein the electrode assembly further comprises:
a first electrode plate;
a second electrode plate; and
a separator between the first electrode plate and the second electrode plate,
wherein the first electrode plate is connected to the first electrode tab, and
wherein the second electrode plate is connected to the second electrode tab.

15. The method of any of claims 11 to 14, wherein
(A) the connecting portion comprises:
a connecting body facing the molding portion; and
an adhesive surface coupled to one surface of the connecting body that faces the exterior portion, the adhesive surface comprising an adhesive material;
and/or
(B) the connecting body includes another adhesive material and the adhesive material is integral with the adhesive surface;
and/or
(C) the adhesive surface is connected to a central portion of the connecting body along the longitudinal direction of the connecting body.
